Europäisches Patentamt

(19) European Patent Office

Office européen des brevets

(11) Publication number : **0 006 315**
**B2**

# (12) NEW EUROPEAN PATENT SPECIFICATION

(45) Date of publication of the new patent specification :
06.07.88

(51) Int. Cl.⁴ : **G 08 B 21/00, D 21 D 1/30**

(21) Application number : 79300954.9

(22) Date of filing : 25.05.79

(54) Method and system for detecting plate clashing in disc refiners.

(30) Priority : 07.06.78 CA 304955

(43) Date of publication of application :
09.01.80 Bulletin 80/01

(45) Publication of the grant of the patent :
07.12.83 Bulletin 83/49

(45) Mention of the opposition decision :
06.07.88 Bulletin 88/27

(84) Designated contracting states :
DE FR IT SE

(56) References cited :
FR-A- 1 442 754
SE-A- 339 576
US-A- 3 793 627
US-A- 3 798 626
US-A- 4 004 289
US-A- 4 092 633
Product Catalogue, SPM Instrument AB, 1975 pp. 5-7
Instandhaltung: "Wälzlagerkontrolle ohne Betrieb-
sunterbrechung", pp. 2-8, Munich, June 1977
Ingenjörshandboken, p. 607, Nordisk Rotogravyr,
Stockholm 1953
ASME Vibrations Conference 1971, paper No. 71-Vibr-
96, "The Rationale of Monitoring Vibration on Rota-
ting Machinery in Continously Operating Process
Plant"

(73) Proprietor : Pulp and Paper Research Institute of
Canada
570 St. John's Boulevard Pointe Claire
Quebec H9R 3J9 (CA)

Price (Nfld.) Pulp & Paper Limited
P.O. Box 500 Grand Falls
Newfoundland A2A 2K1 (CA)

(72) Inventor : Rogers, James Hubert
398 Dublin
Beaconsfield Quebec H9W 1V4 (CA)
Inventor : Butler, Donald James
16 Esmond Street
Grand Falls Newfoundland A2A 2E6 (CA)

(74) Representative : Hartley, David et al
4 Dyer's Buildings Holborn
London EC1N 2JT (GB)

## Description

This invention relates to a method and means for the detection of plate clashing in disc refiners. Such refiners are used for processing a material, e. g., a pulp suspension or a mixture of wood chips, water and chemicals.

A disc refiner includes two discs at least one being rotatable relative to the other and forming between them a narrow, slot-shaped chamber. Each disc is an assembly of wedge-shaped segments bolted or otherwise secured to the surface of a circular plate holder ; the number of segments per disc is specific to the refiner type. The discs are so arranged that they are displaceable toward and away from one another for adjustment of the size of the chamber and the resulting pressure exerted on the material being refined. Under load, the refining pressure forces the material in the chamber into the form of a pad which prevents destructive contact between the two refiner plates. Should the pulp pad break down, due either to process or to machine disturbances or machine failure, plate contact can occur until the pad reforms, the operator releases the plate pressure, or the attendant change in motor load causes the load protection circuits automatically to open the plates. The degree of damage incurred by the plates during the contact period (dependent upon the contact pressure and the period's duration) determines whether they then have to be replaced with a new set. Plate replacement is often necessary.

The capacity of refining units is rapidly increasing and the coast of plate replacement is closely following this same trend. Downtime on a single unit is giving rise to both larger process disturbances and production losses.

At the present time, no effective means exists for anticipating an imminent clash, or for early detection once it occurs, that is suitable for industrial application. A refiner operator can, with careful attention hear the sound of metal-to-metal contact during a clash. His effectiveness, however, varies according to the resident environmental noise and the type of refiner casing. Often, the operator is not near enough to the refiner to hear the emitted sounds and, if they are heard, it is difficult to initiate preventative action before plate damage occurs.

General purpose electronic equipment is available for sound and vibration analysis. Two categories of equipment which are available include on-line real-time signature analyzers, and machine protection systems. Neither of these systems has, as yet, been used for plate clash protection, and both have serious drawbacks that limit their applicability in this area. On-line signature analyzers are used for the characterization of input signals. They suffer from both high cost and complexity. Plate clashing develops rapidly ; signature analyzers do not permit input data to be analyzed quickly enough to allow preventative action to be taken before destructive plate damage occurs. There is no facility for the automatic detection of the relevant phenomena nor for preventative action. Machine protection systems do not have the selectivity required for singling out clash data in an accurate and consistent manner. Thus, the pecularities of the monitored signal, during periods of plate clash, are not readily identifiable with such equipment. Peak detection, upon which machine protection systems depend, is highley erratic due to the nature of the clash phenomena.

Consequently, an object of a broad aspect of the present invention is to provide a consistent and reliable means for the early detection of the plate clash phenomena so that preventive action can then be taken to minimize plate damage and reduce process upsets.

The present invention is predicated on the fact that the energy level in either the vibration or the acoustic signal from a refining unit can be used to warn of early plate clashing. A refiner plate clash detection system based on this appreciation is claimed in claim 1 of the appended claims.

By one variant thereof, the clash detecting system further includes means for maintaining the alarm signal on until manually reset by an operator.

By another variant, the system further includes signal smoothing means connected to the output of the filter means for receiving said first signal and for providing a varying DC voltage output signal to the comparator related to the average amplitude of said first signal, the means for providing a threshold signal comprising adjustable DC voltage supply means.

By one variation thereof, the signal smoothing means comprises an RMS-to-DC voltage converter.

By another variation the means for receiving the output signal includes a circuit including a bistable flip flop operated in one stage in response to said output signal, for generating an alarm signal.

By yet another variation, the system includes resetting means for restoring said flip flop to its other state and thus shutting of said alarm signal.

By another variant, the system includes a vibration sensor mounted on said refiner for sensing vibration and for generating said first signal in response thereto.

By a further variant, the system includes an accelerometer mounted on said refiner for sensing axial vibration and for generating said first signal in response thereto.

By yet another variant, the system includes a microphone for generating said first signal.

By a further variant, the centre frequency of the passband of the filter is determined by the formula

$$f_o = n\Sigma_R$$

wherein $f_o$ is the center frequency of said passband, n = the number of segments at a given radius, per single disc and $\Sigma_R$ = the sum of the rotational rates of the two discs enclosing the given refining volume.

By yet another variant, the system includes a relay operated by said alarm operation signal for automatically opening the refiner plates for reducing the refining pressure or for shutting off the power to the motor turning the refiner plates when the alarm means indicates a clash.

By a further aspect of this invention a method is provided for detecting plate clashing in disc refiners, the method being claimed in claim 10 of the appended claims.

By a variant thereof, the frequency is determined by the formula

$$f_o = n\Sigma_R$$

wherein $f_o$ = a clash frequency; n = the number of segments, at a given radius, per single disc and $\Sigma_R$ = the sum of the rotation rates of two adjacent discs enclosing the given refining volume.

The basis of broad aspects of the present invention was the discovery of the inter-relationship between the power spectral densities of the vibration and acoustic signals, and a clash of refiner plates. During a clash, the power in certain frequency bands increases significantly over that observed under normal running conditions. The frequency bands over which the most interesting changes occur stretch from just above DC to 2.5 KHz for an acoustic signal to 7 KHz for a vibration signal. The vibration signal can be derived from a commercially available accelerometer placed strategically for monitoring vibrations, preferably in the axial direction of the refiner, or located or imbedded in the refiner casing, while the acoustic source can be a microphone in proximity to the unit. Indeed, there may be evidence that the distinct signal frequencies related to a clash occur just prior to a clash.

In the use of the broad concepts of this invention, a maximum energy threshold is established over a chosen frequency band for each signal type (vibration or acoustic) which is only exceeded during plate clashing. By monitoring the translated voltage or current output level of the vibrational or acoustic sensors in the selected band, the plate clash alarm is initiated when the respective threshold level is crossed. The width of the frequency band is a trade-off between the need to monitor all frequencies at which significant changes in power level occur (for stability and repeatability of the alarm) and the need to keep the band narrow substantially to eliminate frequencies which have no role (for noise elimination, sensitivity and reliability). The threshold level is established taking into consideration the necessity of detecting all plate clashes and, at the same time, minimizing false alarms.

The basis for the discovery upon which broad aspects of the present invention is based was originally derived from the observed operation of a Sprout-Waldron, 12 000 horsepower, Twin-50 refiner. However, it is equally applicable to other refining units having discs which rotate relative to each other.

The increase in signal power during the period of a plate clash was noted from an analysis of the acoustic and vibration data. However, a superiority of the vibration signal over the acoustic one in the power analysis was found to exist. Because of the greater stability of the power level in the vibration signal during normal refiner operation, and its more rapid increase on the occurrence of a clash, the use of a vibration monitor as the signal source is preferred, although the invention is not restricted thereto.

To provide effective plate clash protection, an appropriate frequency band over which the sensor signal voltage can be measured must be specified. Ideally, the selected band should be independent of the refiner type and should be predetermined such that no adjustment is required at the mill site. As a band suitable for all refiner types may not exist, it is preferable to be able to specify it by its relationship to certain characteristics of the refiner to be protected. It has not been possible to locate a single frequency band that is known to be suitable for use with all disc refiners tested. However, for all refiners tested, certain major modes of vibration have been noted and, for most, it has been possible to relate these to the plate configuration and the disc rotation rate.

During plate clash, most refiners exhibit pronounced peaks in vibration energy at frequencies given by either the passing rate of the disc segments, $f_o$, or its harmonics. The frequencies are of particular importance for this application due to their relative frequency stability, and their peaking effect during a clash. For a given refining volume, the frequency of vibration $f_o$ is defined by :

$f_o$ = (the number of segments, at a given radius, per single disc) × (the sum of the rotation rates of the two discs enclosing the given refining volume)  (1)

assuming that the number of segments per disc is identical. For these refiners, the required frequency during plate clashing is selected on the basis of the exhibited modes of vibration during clashing, with Equation (1) serving as the basis for the frequency search. Frequency selection for all other refiners is done experimentally, with a thorough analysis of the respective vibration signal.

In the accompanying drawings :

Figure 1   is a block diagram of an embodiment of the plate clash detector system of one aspect of this invention ;

Figure 2   is a graph of a typical output signal amplitude of a vibration sensor against frequency ; and

Figure 3   is a more detailed block diagram of an aspect of this invention.

# 0 006 315

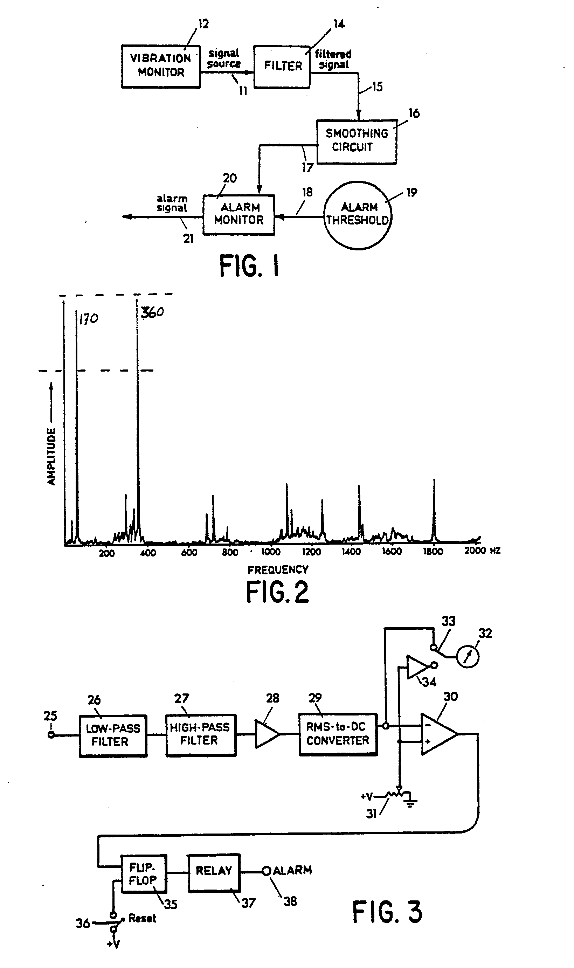

## Description of Figure 1

As seen in Figure 1, a signal source 11, which may be the output of a sensor which is a vibration monitor 12, e.g. an accelerometer or the output of a microphone located adjacent to the discs is fed to a filter 14 (e.g. preferably a 4 pole Butterworth filter) which has a center frequency $f_c$ and a bandwidth W. The filtered signal 15 is smoothed in smoothing circuit 16. The signal 17 of the smoothed filtered signal is compared with a predetermined threshold level 18 from alarm signal threshold circuit 19. If the signal level 17 equals or exceeds the threshold level 18, an alarm monitor circuit 20 is activated, and an alarm signal 21 is provided.

## Description of Figure 2

Figure 2 shows the amplitude vs. frequency of typical output signals from a vibration monitor during plate clashing. The signal is generally of low amplitude across the lower portions of the audio frequency band and in the absence of clashing, would be at the approximate low amplitude across the entire band.

However, upon clashing of the plates, it has been found that relatively very high amplitude signals occur at specific frequencies (which will be discussed in more detail below). In the present example of Figure 2, there is clearly a well-defined peak a 360 Hertz (as well as at 120 Hertz).

## Operation of embodiment of Figure 1

In use, the signal from either a vibration or acoustic sensor which forms the vibration monitor is passed through a filter having centre frequency $f_c$ and bandwidth W, both $f_c$ and W being matched to the frequency of the signals produced upon clashing of the discs. The centre frequency of the filter for the signal spectrum shown in Figure 2 should thus be at 360 Hertz.

After filtering, the signal is smoothed (for example, by converting the RMS level to a DC voltage level) which signal is then compared with a predetermined threshold signal (i. e. a DC threshold voltage). If the threshold level is exceeded, some form of alarm is activated or protective action is taken, as desired. The system can be implemented using hard-wired circuitry (analog or digital), an appropriately programmed digital computer, or a hybrid of each.

There are various electrical circuits that can achieve the objects described above. In one particular embodiment shown in block diagram in Figure 1, the input signal is provided by a commercially available accelerometer which is mounted to monitor axial vibrations on the refiner casing, powered by a constant current source of conventional construction. This input signal is then filtered by a filter, with one or more passband frequencies set such that the vibrational frequencies within the desired monitoring bank are passed unattenuated. A gain stage raises the signal level to an appropriate value, for ease of detection, and this signal is RMS-to-DC converted to obtain a smoothed varying DC signal level. The DC signal is applied to a comparator with a reference DC threshold signal, which triggers downstream alarm circuits when the threshold level is exceeded. A visible and audible alarm can be provided to alert the refiner operator. Additionally, a relay is preferably provided which can be used either automatically to open the refiner plates or to reduce the refining pressure, when a clash is identified. The audible alarm and protection relay, once triggered, should be reset by the operator, while the visible alarm turns ON and OFF with the alarm condition.

## Description of Figure 3

A more detailed block diagram of an aspect of this invention is shown in Figure 3. An input signal from the vibration monitor, which can be either an accelerometer, microphone, etc. as noted earlier is applied to input terminal 25. The bandwidth of the accelerometer should extend at least between 1 and 7 000 Hertz, which includes all of the frequencies of interest in the present case.

The specific translation bandwidth of the circuit is preferably defined by a bandpass filter. This can be implemented by using a series of a pair of filters, the first being a low pass filter 26 connected to the input of a high pass filter 27, with the input terminal 25 connected to the input of low pass filter 26. Of course, filters connected in parallel can be used to pass different frequencies of the signal related to the clash.

Preferably, the high frequency band-end of the low pass filter is variable, as is the low frequency band end of high pass filter 27. By varying the band-ends, a passband can be produced which has a frequency width sufficient to encompass the peaking vibrational signal produced during a clash, and having a centre frequency at the midpoint of the peaking signal.

The output of high pass filter 27 is connected to the input of an amplifier 28, the output of which is applied to the input of an RMS-to-DC converter 29. The output of the RMS-to-DC converter 29 is connected to one input of comparator 30, the other input of which is connected to an adjustable DC voltage source, e.g., the tap on potentiometer 31 which is connected between ground and a source of potential + V.

It is also preferred that the output of the RMS-to-DC converter 29 should be connected to the input of a voltmeter 32 through a switch 33. The voltmeter 32 is also connected to the tap of potentiometer 31

4

through an amplifier 34 and switch 33.

The output of comparator 30 is connected to one of the inputs of a bistable flip flop 35, the other input of which is connected through a reset switch 36 to a source of potential + V.

The output of flip flop 35 is connected to a relay 37 which has its contact connected to an alarm terminal 38 for operation thereof.

In operation, the normal signal outputs of the sensor, which are at low level as shown in Figure 2, are applied to terminal 25 of the plate clash monitor. The signals are filtered in low pass and high pass filters 26 and 27, and are normally at low amplitude voltage level.

However, in the case of a plate clash, a relatively high level signal at the frequency of the bandpass of the combinaison of filters 26 and 27 is generated, and passes therethrough. The signal at this frequency is amplified in amplifier 28, and applied to RMS-to-DC converter 29.

In converter 29 the signal is effectively smoothed, and a relatively constant, or relatively slowly varying DC signal is applied to comparator 30.

The other input of comparator 30 has a preset threshold DC signal applied thereto. Once the output signal of converter 29 exceeds the aforenoted threshold signal, an output signal is produced from comparator 30 and is applied to the input of flip flop 35. With the polarity of the input signals from comparator 30 being proper, flop flop 35 operates and remains stable in the operated state. An output signal thus results and is applied to relay 37, which itself operates and remains on. With its contacts closed, an alarm connected to terminal 38 is thus operated and remains operated.

Once an operator has become alerted, and wishes to shut-off the alarm, he manually closes reset switch 36, which resets flip flop 35 into its original state. The output signal of flip flop is thus removed (unless further clashing of the plates is encountered), and thus relay 37 is released, shutting off the alarm.

One relatively simple way of setting the alarm threshold level is to place switch 33 in position by which meter 32 monitors the DC output signal of converter 29, the highest level DC signal is monitored during the non-clashing periods. In addition, the minimum high amplitude signal level is noted during a clashing period.

Switch 33 is then switched into position at the output of amplifier 34. Amplifier 34, being a unitary gain buffer amplifier, does not change the level of the DC voltage signal which is input to the comparator and is read on meter 32. Potentiometer 31 is then adjusted to a level intermediate the highest level normal DC output signal from converter 29 and the lowest level signal present during clashing. Of course other ways of setting the threshold can be utilized if desired.

It will be understood by a person skilled in the art that numerous variations and additions to the circuit noted above can be provided. For example, while comparator 30 has been described as being in analog form, it can be strobed and its output signal be of pulse form. Flip flop 35 can operate in synchronization therewith, and operate an audible alarm with its output pulses directly. Other means can be used to lock up a relay (either electromagnetic or solidstate) whereby a constant alarm which must be manually reset is operated.

The accelerometer may be that sold by Unholtz-Dickie as Model 8803 accelerometer with magnetic base. The filter may be a series of a low pass filter and a high pass filter to define the passband ; the low pass filter may be that sold by Frequency Devices as Model 744PB-3, a four pole Butterworth low pass filter. The high pass filter may be that sold by Frequency Devices as Model No. 774BT-3, a four pole Butterworth resistive tuneable highpass filter. The RMS-to-DC converter may be that sold by Analog Devices as Model No. 441J.

A series of trials have been carried out to elucidate the range of application of the described sensor. Both the distinctiveness of the clash phenomena as well as the possibilities for frequency band selection were examined, for various refiner types. The lack of a good sensor for measuring plate separation makes it difficult to guarantee when plate clashing actually occurs. Consequently, the described frequency phenomena were related to plate clashing in three ways :

(a) experienced refiner operators were used to help identify a clash occurrence ;

(b) linear velocity displacement transducers, LVDT's were used to monitor plate movement ;

(c) forced clashes were initiated without chips, where the only possible contact between the plates was metal-to-metal.

Sprout-Waldron twin-50 (60 Hertz supply)

Eight clashes were studied. The accelerometer was located on the refiner casing, measuring vibration in either the axial or radial direction. Along with the vibration signal, the motor load, the chip-belt speed and a measure of plate movement from an LVDT were recorded. It was found that :

(i) At a frequency of 360 Hz, there was a pronounced increase in the amplitude of the vibration during a clash.

(ii) The total energy in the signal (the integral over frequency of the vibration spectrum) did not vary significantly during a clash.

(iii) Using Equation (1), the number of plate segments (12) multiplied by the rotation speed (30 Hz) located the dominant vibration mode, 360 Hz.

(iv) Better clash detection resulted with the accelerometer measuring vibration in the axial direction.

5

Sprout-Waldron twin-50 (50 Hertz supply)

Results are similar to those obtained with this refiner operating from a 60 Hz supply, excepting the location of the dominant vibration mode. The dominant frequency was 300 Hz, equal to the product of rotation speed (25 Hz) and the number of plate segments (12).

Sprout-Waldron 42-1A

Two clashes were analyzed, with the accelerometer measuring axial vibration. It was found that :
(i) The first clash gave rise to three large peaks at 720, 1 440 and 2 160 Hz, respectively.
(ii) The second clash showed a dominant peak at 2 160 Hz.
(iii) The energy peaks were located at frequencies that are integral multiples of 360 Hz, the product of rotation speed and the number of plate segments.

Sprout-Waldron 42-1B

Three separate trials were conducted on this refiner, with the following results :
(i) A peak at 360 Hz was always present during clashing.
(ii) The total energy in the vibration signal could diminish during a clash ; nevertheless, the amplitude of the vibration at 360 Hz still increased.
(iii) The rotation speed (30 rotations per second) multiplied by the number of segments (12) located the 360 Hz mode.

Sprout-Waldron 361-CP (pressurized)

Two clashes were observed, with the sensor measuring axial vibration. A distinct peak at 610 and 625 Hz was noted for each, respectively. It was also noted that :
(i) There was a slight shift in frequency between the clashing and non-clashing conditions, likely caused by a small change in the speed of rotation of the induction motor.
(ii) The noted frequencies could not be related to the rotation speed of the disc and the number of segments, using Equation (1). However, it is believed that this is due to rotational speed changes of the disc due to the clash.

Bauer 400

This is a double-disc refiner driven by two induction motors. The nominal speed of disc rotation is 1 200 rpm and each refining plate is made up of six segments. It was found that :
(i) With both discs rotating, a major energy peak was located between 215 and 240 Hz, during a clash. The latter frequency was equivalent to the product of the number of segments per plate (6) and the sum of the rotation frequency of each of the two counter-rotating discs (40 Hz).
(ii) There was a slight shift in the peaking frequency and this was related to variations in the rotation speed of the induction motors during clashing.
(iii) For certain clashes, the second harmonic (480 Hz) of the characteristic frequency appeared as the main mode of vibration. For others, the characteristic frequency, the second harmonic, or both, could be present.
(iv) With only one disc rotating, a major peak was found around 100 Hz, during clashing. This was lower than the expected frequency of 120 Hz and it is though that this may be due to variations in the rotational speed of the disc.

Bauer 412

Vibrations were measured in the axial direction. A peak in energy is found at 480 Hz, which is the second harmonic of the frequency calculated using Equation (1).

Defibrator RPL50

Each disc plate on this refiner has three different sections. The outer one has 12 segments, the middle section has eight and the inner section has four. The middle section on the stationary disc can be moved slightly in the axial direction. Tests were made with the sensor monitoring axial vibration. It was found that :
(i) There was a large peak at 960 Hz, surrounded by peaks of smaller amplitude, 30 Hz apart.
(ii) A vibration peak also occurred at 480 Hz, suggesting that the middle section of the discs, made up of eight segments, were contacting. Using Equation (1), the base frequency calculated was 240 Hz, for 8 sections and 30 Hz rotation.

Defibrator RPL50 (pressurized)

The disc configuration is the same as that described previously. With the sensor measuring vibration in the axial direction, a series of peaks were again evident, with the one at 720 Hz particularly outstanding at the beginning of the clash. The minor peaks are again 30 Hz apart. This suggests that the outer part of the disc, with 12 segments, was clashing.

The results of these various tests, together with the expected peaks calculated using Equation (1), are listed in Table 1.

Table 1

Summary of test results ; refiner clashing

| Refiner type | Disc rotation rpm/rps | No. of rotating discs | Segments per disc, at given radius | $f_o$ Hz | Observed peaks (Hz) |
|---|---|---|---|---|---|
| Sprout-Waldron Twin-50 (60 Hz) | 1800/30 | 1 (per volume) | 12 | 360 | 360 |
| Sprout-Waldron Twin-50 (50 Hz) | 1500/25 | 1 (per volume) | 12 | 300 | 300 |
| Sprout Waldron 42-1A | 1800/30 | 1 | 12 | 360 | 720 1440 2160 |
| Sprout-Waldron 42-1B | 1800/30 | 1 | 12 | 360 | 360 |
| Sprout-Waldron 361-CP | 1800/30 | 1 | 9 | 270 | 610 630 |
| Bauer 400 | 1200/20 | 2 | 6 | 240 | 215 240 |
| Bauer 412 | 1200/20 | 2 | 6 | 240 | 480 |
| Defibrator (Open-Discharge) | 1800/30 | 1 | 4-Inner 8-Middle 12-Outer | 120 240 360 | 960 |
| Defibrator (pressurized) | 1800/30 | 1 | 4-Inner 8-Middle 12-Outer | 120 240 360 | 720 |

Vibration measurements in the axial direction were generally found to give better results than those in the radial. Except for some preliminary trials, the sensor was always located as close as possible to the refining chamber, wherein the alarm frequencies originate. In the case of the Sprout-Waldron Twin-50, sensor position is more crucial as there are two refining chambers to monitor ; identification of the clashing disc-set is important in those situations where clashing can be prevented by the adjustment of either the chip feed rate or the dilution water flow. It may be advantageous to use two vibration sensors, one to monitor each refining chamber, to identify the clashing set.

In summary, tests have been carried out on fourteen refiners, of nine different types. Clashing has been initiated by either reducing the chip feed or by forcing the plates closer together. In all cases, the vibration signal exhibits a very large increase in amplitude at specific frequencies, at the time of plate clash. With one exception, the Sprout-Waldron 361-CP, observed frequencies were equal to either a fundamental frequency, $f_o$, or its harmonics. The Sprout-Waldron Twin-50, as well as the 42-1B, show high vibration energy at the fundamental frequency, $f_o$. All other refiners tested, excepting the Sprout-Waldron 361-CP, have a major vibration mode at the second harmonic of the fundamental frequency. The Bauer 400 peaks at the expected fundamental frequency. The second harmonic, however, is often the dominant one.

The ease and reliability of vibration measurement makes the use of an accelerometer very desirable. It was noted that there were very distinct changes in the frequency spectrum of the vibration signal at the time of plate clashing. It was observed that the total energy in the vibration signal, over the total frequency range analyzed (0 to 5 000 Hz), tended either to increase or to remain constant during plate clashing. There were instances, nonetheless, where this total energy was reduced. In all cases, however, the energy level at the characteristic frequency, $f_o$, or its harmonics always increased during clashing.

## Claims

1. A plate clash detection system for a disc refiner characterised by a detector (12, 14, 16) for producing an output signal representative of the level of acoustic or physical vibration generated by the disc refiner, in use, at a distinct frequency related to an imminent or actual plate clash, within a range between 0.001 and 7 kHz, and a monitor circuit (20) for generating an alarm signal (21) when the said output signal exceeds a threshold level (18) less than the level of vibration at that frequency generated by an actual plate clash.

2. A system according to claim 1 wherein the said frequency is also related to the number of segments at a given radius of a single disc and the rotational rates of the disc.

3. A system according to claim 1 wherein the said frequency is a harmonic frequency of the fundamental frequency related to plate clash, the number of segments at a given radius of a single disc and the rotational rates of the discs.

4. A system according to any one of claims 1 to 3 wherein the detector comprises a transducer (12) responsive to acoustic or physical vibration of the refiner the output signal (11) of the transducer being connected via a filter (14) to means (16) for smoothing the filtered signal to produce the said first output signal.

5. A system according to claim 4 characterised in that, the centre frequency of the passband of the filter (14) is determined by the formula

$$f_o = n\Sigma_R$$

wherein $f_o$ is the centre frequency (expressed in Hertz) of said passband, n = the number of segments at a given radius, per single disc and $\Sigma_R$ = the sum of the rotational rates (expressed in Hertz) of the two discs enclosing a given refining volume.

6. A system according to claim 4 or claim 5, characterised in that said signal smoothing means (16) is connected to the output (15) of the filter means (14) and is adapted to receive the filtered signal (15) and provide to the monitor circuit (2) a varying DC voltage output signal which is related to the average amplitude of the filtered signal ; and in that the system comprises adjustable DC voltage supply means (31) for providing a DC threshold signal.

7. A system according to any one of claims 4 to 6 characterised in that the transducer (12) comprises a vibration sensor mounted on the refiner for sensing vibration.

8. A system according to any one of claims 4 to 6 characterised in that the transducer (12) comprises an accelerometer mounted on the refiner for sensing axial vibration.

9. A system according to any one of claims 4 to 6 characterised in that the transducer (12) comprises a microphone responsive to acoustic vibrations generated by the refiner.

10. A method of detecting plate clashing in disc refiners which comprises :

monitoring the level of acoustic or physical vibration of the disc refiner at a distinct frequency related to an imminent or actual plate clash within a range between 0.001 and 7 KHz and generating a first signal representative of the said vibration level ;

comparing the said signal with a threshold signal level corresponding to a vibration level less than vibration at that frequency generated by an actual plate clash ; and

generating an alarm signal when the said signal exceeds the threshold signal.

11. A method according to claim 10 characterised in that said distinct frequency is the fundamental frequency related to an actual or imminent clash, the number of segments at a given radius of a single disc and the rotational rates of the disc.

12. A method according to claim 10 characterised in that said distinct frequency is a harmonic frequency of the fundamental frequency related to an actual or imminent clash, the number of segments at a given radius of a single disc and the rotational rates of the discs.

13. A method according to any one of claims 10, 11 or 12 characterised in that the distinct frequency is determined by the formula

$$f_o = n\Sigma_R$$

wherein $f_o$ = a clash frequency (expressed in Hertz), n = the number of segments, at a given radius per single disc and $\Sigma_R$ = the sum of the rotation rates (expressed in Hertz) of two adjacent discs enclosing a given volume.

## Patentansprüche

1. System zum Entdecken von Plattenklirren in einer Scheibenmühle, gekennzeichnet durch einen Detektor (12, 14, 16) zur Erzeugung eines Ausgangssignals entsprechend der Höhe einer von der Scheibenmühle im Betrieb erzeugten akkustischen oder körperlichen Schwingung bei einer gegenüber einem bevorstehenden oder tatsächlichen Plattenklirren verschiedenen Frequenz innerhalb eines Bereichs zwischen 0,001 und 7 kHz, und durch einen Monitorkreis (20) zur Erzeugung eines Alarmsignals (21), wenn das Ausgangssignal einen Schwellenwert (18) überschreitet, der geringer ist als die Höhe der Schwingung bei der durch ein tatsächliches Plattenklirren erzeugten Frequenz.

2. System nach Anspruch 1, dadurch gekennzeichnet, daß die Frequenz auch im Verhältnis steht zur Anzahl der Segmente bei einem gegebenen Radius einer einzigen Scheibe und der Drehgeschwindigkeit der Scheibe.

3. System nach Anspruch 1, dadurch gekennzeichnet, daß die Frequenz eine harmonische Frequenz der Grundschwingungsfrequenz bezüglich des Plattenklirrens, der Anzahl der Segmente bei einem gegebenen Radius einer einzigen Scheibe und der Drehgeschwindigkeit der Scheiben ist.

4. System nach einem der Ansprüche 1 bis 3, dadurch gekennzeichnet, daß der Detektor einen Signalumformer (12) aufweist, der auf die akustische oder körperliche Schwingung der Mühle anspricht und daß das Ausgangssignal (11) des Signalumformers über einen Filter (14) mit einer Einrichtung (16) zum Glätten des gefilterten Signals verbunden ist zur Erzeugung des ersten Ausgangssignals.

5. System nach Anspruch 4, dadurch gekennzeichnet, daß die Trägerfrequenz des Durchlaßbereiches des Filters (14) durch die Formel bestimmt ist

$$f_o = n\Sigma_R,$$

wobei $f_o$ = die Trägerfrequenz (ausgedrückt in Hertz) des Durchlaßbereiches ist, n = die Anzahl der Segmente bei einem gegebenen Radius pro Einzelscheibe und $\Sigma_R$ = die Summe der Drehgeschwindigkeiten (ausgedrückt in Hertz) der zwei Scheiben, die ein gegebenes Mahlvolumen einschließen.

6. System nach Anspruch 4 oder 5, dadurch gekennzeichnet, daß die Einrichtung (16) zum Glätten des Signals mit dem Ausgang (15) der Filtereinrichtung (14) verbunden und angepaßt ist, um das gefilterte Signal (15) aufzunehmen und an den Monitorkreis (2) ein wechselndes Gleichstromspannungsausgangssignal zu liefern, welches in Bezug steht zu der Durchschnittsamplitude des gefilterten Signals, und daß das System eine einstellbare Gleichstromspannungsversorgungseinrichtung (31) zur Lieferung eines Gleichstromschwellensignals aufweist.

7. System nach einem der Ansprüche 4 bis 6, dadurch gekennzeichnet, daß der Signalumformer (12) einen Schwingungsfühler aufweist, der auf der Mühle angeordnet ist zur Wahrnehmung der Schwingung.

8. System nach einem der Ansprüche 4 bis 6, dadurch gekennzeichnet, daß der Signalumformer (12) ein Beschleunigungsmesser aufweist, der auf der Mühle angeordnet ist zur Wahrnehmung axialer Schwingungen.

9. System nach einem der Ansprüche 4 bis 6, dadurch gekennzeichnet, daß der Signalumformer (12) ein Mikrophon aufweist, welches auf von der Mühle erzeugte akustische Schwingungen anspricht.

10. Verfahren zum Entdecken von Plattenklirren in einer Scheibenmühle, welches umfaßt :
Überwachen der Höhe einer akkustischen oder körperlichen Schwingung der Scheibenmühle bei einer gegenüber einem bevorstehenden oder tatsächlichen Plattenklirren verschiedenen Frequenz innerhalb eines Bereichs zwischen 0,001 und 7 kHz und Erzeugen eines ersten Signals entsprechend dieser Schwingungshöhe,
Vergleichen des Signals mit einem Signalhöhenschwellenwert, der einer Schwingungshöhe entspricht, die geringer ist als die der Schwingung bei der von einem tatsächlichen Plattenklirren erzeugten Frequenz, und
Erzeugen eines Alarmsignals, wenn das Signal den Signalschwellenwert übersteigt.

11. Verfahren nach Anspruch 10, dadurch gekennzeichnet, daß die sich unterscheidende Frequenz eine Grundschwingungsfrequenz ist bezüglich eines tatsächlichen oder bevorstehenden Klirrens, der Anzahl der Segmente bei einem gegebenen Radius einer einzelnen Scheibe und der Drehgeschwindigkeit der Scheibe.

12. Verfahren nach Anspruch 10, dadurch gekennzeichnet, daß die sich unterscheidende Frequenz eine harmonische Frequenz einer Grundschwingungsfrequenz ist bezüglich eines tatsächlichen oder bevorstehenden Klirrens, der Anzahl der Segmente bei einem gegebenen Radius einer einzelnen Scheibe und der Drehgeschwindigkeit der Scheiben.

13. Verfahren nach einem der Ansprüche 10, 11 oder 12, dadurch gekennzeichnet, daß die sich unterscheidende Frequenz bestimmt ist durch die Formel

$$f_o = n\Sigma_R,$$

wobei $f_o$ = eine Klirrfrequenz (ausgedrückt in Hertz), n = Anzahl der Segmente bei einem gegebenen Radius pro Einzelscheibe und $\Sigma_R$ = die Summe der Drehgeschwindigkeiten (ausgedrückt in Hertz) zweier benachbarter Scheiben, die ein gegebenes Volumen einschließen.

**Revendications**

1. Dispositif de détection de contact de plaques ou de cliquetis pour un raffineur à disques, caractérisé en ce qu'il comprend un détecteur (12, 14, 16) qui émet un signal de sortie représentatif du niveau de la vibration acoustique ou physique engendrée par le raffineur à disques, en fonctionnement, à une fréquence distincte liée à un contact de plaques imminent ou effectif, dans une plage comprise entre 0,001 et 7 kHz, et un circuit de contrôle (20) qui engendre un signal d'alarme (21) lorsque ledit signal de sortie dépasse un niveau de seuil (18) inférieur au niveau de vibration à la fréquence qui est engendrée par un contact effectif des plaques.

2. Dispositif suivant la revendication 1, caractérisé en ce que la fréquence est également liée au nombre de segments, à un rayon donné, d'un disque unique et aux vitesses de rotation des disques.

3. Dispositif suivant la revendication 1, caractérisé en ce que la fréquence est une fréquence harmonique de la fréquence fondamentale liée au contact des plaques, au nombre de segments, à un rayon donné, d'un disque unique et aux vitesses de rotation des disques.

4. Dispositif suivant l'une quelconque des revendications 1 à 3, caractérisé en ce que le détecteur comprend un transducteur (12) qui est sensible à la vibration acoustique ou physique du raffineur, le signal de sortie (11) du transducteur étant envoyé par l'intermédiaire d'un filtre (14) à des moyens (16) de lissage du signal filtré, pour produire ledit premier signal de sortie.

5. Dispositif suivant la revendication 4, caractérisé en ce que la fréquence centrale de la bande passante du filtre (14) est déterminée par la formule

$$f_o = n\Sigma_R$$

dans laquelle $f_o$ est la fréquence centrale (exprimée en Hertz) de ladite bande passante, n est le nombre de segments, à un rayon donné, par disque unique, et $\Sigma_R$ est la somme des vitesses de rotation (exprimées en Hertz) des deux disques délimitant un volume de raffinage donné.

6. Dispositif suivant la revendication 4 ou la revendication 5, caractérisé en ce que les moyens (16) de lissage sont raccordés à la sortie (15) des moyens de filtrage (14) et sont prévus pour recevoir le signal filtré (15) et fournir au circuit de contrôle (20) un signal de sortie en tension continue variable qui est lié à l'amplitude moyenne du signal filtré ; et en ce que le dispositif comprend des moyens (31) de production d'une tension continue réglable, pour fournir un signal de seuil en tension continue.

7. Dispositif suivant l'une quelconque des revendications 4 à 6, caractérisé en ce que le transducteur (12) comprend un détecteur de vibration monté sur le raffineur, pour détecter la vibration.

8. Dispositif suivant l'une quelconque des revendications 4 à 6, caractérisé en ce que le transducteur (12) comprend un accéléromètre monté sur le raffineur, pour détecter la vibration axiale.

9. Dispositif suivant l'une quelconque des revendications 4 à 6, caractérisé en ce que le transducteur (12) comprend un microphone qui est sensible aux vibrations acoustiques engendrées par le raffineur.

10. Procédé de détection du contact des plaques ou cliquetis dans des raffineurs à disques, qui consiste à :

contrôler le niveau de vibration acoustique ou physique du raffineur à disques, à une fréquence distincte liée à un contact de plaques imminent ou effectif dans une plage comprise entre 0,001 et 7 kHz, et émettre un premier signal représentatif dudit niveau de vibration ;

comparer ledit signal à un niveau de signal de seuil correspondant à un niveau de vibration inférieur à la vibration à la fréquence qui est engendrée par un contact effectif des plaques ; et

émettre un signal d'alarme lorsque ledit signal dépasse le signal de seuil.

11. Procédé suivant la revendication 10, caractérisé en ce que la fréquence distincte est la fréquence fondamentale liée à un contact effectif ou imminent, au nombre de segments à un rayon donné d'un disque unique et aux vitesses de rotation des disques.

12. Procédé suivant la revendication 10, caractérisé en ce que ladite fréquence distincte est une fréquence harmonique de la fréquence fondamentale liée à un contact effectif ou imminent, au nombre de segments à un rayon donné d'un disque unique et aux vitesses de rotation des disques.

13. Procédé suivant l'une quelconque des revendications 10, 11 ou 12, caractérisé en ce que la fréquence distincte est déterminée par la formule

$$f_o = n\Sigma_R$$

dans laquelle $f_o$ est une fréquence de contact (exprimée en Hertz), n est le nombre de segments à un rayon donné par disque unique et $\Sigma_R$ est la somme des vitesses de rotation (exprimées en Hertz) de deux disques adjacents délimitant un volume donné.

FIG. I

FIG. 2

FIG. 3